Europäisches Patentamt

European Patent Office

Office européen des brevets

(19)

(11) Veröffentlichungsnummer: **0 232 775**

**A1**

# (12) EUROPÄISCHE PATENTANMELDUNG

(21) Anmeldenummer: 87100957.7

(22) Anmeldetag: 23.01.87

(51) Int. Cl.⁴: **H04N 1/028** , G01T 1/29 , G02B 6/06

(30) Priorität: 07.02.86 DE 3603928

(43) Veröffentlichungstag der Anmeldung:
19.08.87 Patentblatt 87/34

(84) Benannte Vertragsstaaten:
DE FR

(71) Anmelder: **Siemens Aktiengesellschaft Berlin
und München
Wittelsbacherplatz 2
D-8000 München 2(DE)**

(72) Erfinder: **Conrad, Bernhard, Dipl.-Phys.
Rosenau 19
D-8520 Erlangen(DE)**
Erfinder: **Tressl, Günther
Dompfaffstrasse 12
D-8526 Bubenreuth(DE)**

(54) **Lichtleiteroptik.**

(57) Die Erfindung betrifft eine Lichtleiteroptik zur
Lichtführung des von einer Vorlage (4) emittierten
Lichtes zu einem lichtelektrischen Wandler (20), der
eine Umwandlung des ausgelesenen Bildes der Vorlage (4) in elektrische Signale bewirkt, wobei die
Vorlage (4) zeilenförmig abgetastet wird. Die Lichtleiteroptik (7) besteht aus einer lichtleitenden Platte -
(13), die eine auf die Vorlage (4) ausgerichtete erste
geradlinige Schmalseite (14) und eine die Enden
dieser Schmalseite (14) verbindende, zumindest bereichsweise bogenförmig gekrümmte zweite Schmalseite (15) aufweist. Die Platte weist ein Loch (16) zur
Aufnahme des Wandlers (20) auf, der das aus der
das Loch (16) begrenzenden Fläche der Platte austretende Licht empfängt.

FIG 6

EP 0 232 775 A1

## Lichtleiteroptik

Die Erfindung betrifft eine Lichtleiteroptik zur Lichtführung des von einer Vorlage emittierten Lichtes zu einem lichtelektrischen Wandler, der eine Umwandlung des ausgelesenen Bildes der Vorlage in elektrische Signale bewirkt, wobei die Vorlage zeilenförmig abgetastet wird. Eine derartige Vorrichtung dient bei einer bildpunktweisen Abtastung einer Vorlage zur Leitung des emittierten Lichtes der einzelnen Bildpunkte einer gesamten Zeile auf einen lichtelektrischen Wandler. Die Vorlage kann beispielsweise ein Röntgenfilm oder ein Lumineszenz-Speicherleuchtschirm sein, in dem ein Röntgenbild latent gespeichert ist.

In der US-PS 4 485 302 ist eine derartige Lichtleiteroptik beschrieben, die zur Abtastung eines Speicherleuchtstoffes verwendet wird. In einer Röntgendiagnostikeinrichtung wird als strahlenempfindlicher Wandler ein Leuchtschirm aus einem Lumineszenz-Speicherleuchtstoff mit Röntgenstrahlen bestrahlt, so daß dieser ein latentes Röntgenstrahlenbild speichert. In einer Auslesevorrichtung wird dieser Lumineszenz-Speicherleuchtschirm als Vorlage von einer zusätzlichen Strahlenquelle, beispielsweise einem Laser, bildpunktweise zum Leuchten angeregt und dadurch das Bild ausgelesen. Während der Abtastung einer Zeile durch den Laserstrahl wird das von dem Speicherleuchtschirm emittierte Licht durch eine auf der Eingangsseite geradlinige Lichtleiteroptik erfaßt. Auf der Ausgangsseite ist die Lichtleiteroptik kreisförmig gebogen, an deren Ausgangsfläche der lichtelektrische Wandler angeordnet ist. Das Ausgangssignal des Wandlers wird dann einer normalen Fernsehkette zur Wiedergabe des Röntgenbildes zugeführt.

Der Übergang von der geradlinigen Ausdehnung der Lichtleiteroptik zur kreisförmigen Ausbildung erfolgt nicht abrupt, sondern fließend, da sonst ein zu großer Anteil des Lichtes aus der Lichtleiteroptik austreten könnte. Dadurch wird eine im Vergleich zur Zeilenlänge große Länge benötigt. Daraus folgt aber insbesondere bei kurzwelligem Licht, das die Speicherleuchtstoffe ausstrahlen, ein zusätzlicher Lichtverlust durch Absorption, der proportional zur Länge ist. Außerdem ist die Herstellung erner solchen Lichtleiteroptik schwierig und bedarf vieler Bearbeitungsschritte.

Die Erfindung geht von der Aufgabe aus, eine Lichtleiteroptik der eingangs genannten Art zu - schaffen, die in bezug auf die Zeilenlänge nur eine geringe Abmessung quer zur Zeilenrichtung aufweist, so daß die Lichtverluste auf ein Miminum reduziert werden können.

Die Aufgabe wird erfindungsgemäß dadurch gelöst, daß die Lichtleiteroptik aus einer lichtleitenden Platte besteht, die eine auf die Vorlage ausgerichtete erste geradlinige Schmalseite und eine die Enden dieser Schmalseite verbindende, bogenförmig gekrümmte zweite Schmalseite aufweist, und daß die Platte ein Loch zur Aufnahme des Wandlers aufweist, der das aus der das Loch begrenzenden Fläche der Platte austretende Licht empfängt. Durch diese Ausbildung der Lichtleiteroptik wird das auf der geradlinigen Schmalseite eintretende Licht an der gekrümmten zweiten Schmalseite derart total reflektiert, bis daß es aus dem Loch austritt und auf den Wandler fällt, der somit nahezu das gesamte durch die erste Schmalseite in die Platte eingetretene Licht empfängt und in ein elektrisches Signal umwandelt. Durch die Anordnung des Wandlers in einem Loch innerhalb des Lichtleiteroptik ergeben sich kurze Strahlenwege, so daß nur geringe Lichtverluste auftreten.

Der reflektierte Anteil wird noch erhöht, wenn die zweite Schmalseite von einem Spiegel umgeben ist. Ein vorteilhafter, kompakter Aufbau ergibt sich, wenn die Platte gegenüber der Vorlage in einem ersten Winkel ausgerichtet ist und wenn die erste Schmalseite in einem zweiten Winkel gegenüber der Flächennormale der Platte derart ausgerichtet ist, daß die erste Schmalseite einen Winkel von etwa 45° gegenüber der Vorlage aufweist. Es hat sich als vorteilhaft erwiesen, wenn der erste Winkel etwa 60° und der zweite Winkel etwa 15° beträgt. Das von der Vorlage emittierte Licht wird auf die erste Schmalseite konzentriert, wenn ein gekrümmter zweiter Spiegel zwischen der Vorlage und der im Abstand zur Vorlage liegenden Kante der ersten Schmalseite angeordnet ist. Der Aufbau der Lichtleiteroptik vereinfacht sich, wenn ein Abtaststrahl für die Vorlage zwischen der Platte und dem zweiten Spiegel durchgeführt ist und nahezu senkrecht auf der Vorlage auftrifft.

Neben der normalen Reflexion läßt sich auch die verlustfreie totale Reflexion gleichzeitig verwenden, wenn der erste Spiegel in geringem Abstand von der zweiten Schmalseite angeordnet ist. Dies ist besonders wichtig, weil es Lichtwege mit Mehrfachreflexion an der gekrümmten Fläche gibt, die bei Reflexionen an dem Spiegel einen hohen Verlust bedeuten würden. Alle solche Lichtwege verlaufen unter Totalreflexion, wenn der Spiegel nicht angekoppelt ist. Die Lichtwege mit einem kleinen Einfallswinkel auf die gekrümmte Wand, haben nur eine Reflexion an dem Spiegel; eine Totalreflexion ist nicht möglich. Eine einfache Befestigung des ersten Spiegels ergibt sich, wenn die zweite Schmalseite in Richtung ihrer kleinen Abmessung - schwach konkav gekrümmt ist und der aus einer metallisch bedampften Folie bestehende Spiegel auf dieser Schmalseite aufgespannt ist.

Das Licht des Abtaststrahles läßt sich eliminieren, wenn die Platte zweiteilig ausgeführt ist, wobei der erste Teil einen Hauptlichtleiter mit dem den Wandler aufnehmenden Loch und der zweite Teil ein Vorsatzstück bildet, das die erste Schmalseite aufweist, und wenn zwischen den aneinander angrenzenden Seiten des Hauptlichtleiters und des Vorsatzstückes ein streifenförmiger Filter angeordnet ist. Lichtverluste an der Übergangsstelle des Filters lassen sich vermeiden, wenn wenigstens im Bereich des Filters der Querschnitt des Hauptlichtleiters größer als der des Vorsatzstückes ist. Das Einfallen von seitlichem Störlicht kann verhindert werden, wenn Lichtleiteroptik und Wandler von einem Lichtschutzgehäuse umgeben sind.

Es hat sich als vorteilhaft erwiesen, daß die Krümmung der zweiten Schmalseite zumindest bereichsweise die Form einer Evolute hat, deren Krümmungsradien in der Nähe der ersten Schmalseite die größten Werte aufweisen. Die Effektivität der Lichtführung ist besonders hoch, wenn zwei symmetrische Evoluten der zweiten Schmalseite auf der lichtempfindlichen Fläche des Wandlers in dem Loch auslaufen. Ein einfacher und sicherer Aufbau der Lichtleiteroptik wird erreicht, wenn die zweite Schmalseite in einem Bereich von der ersten Schmalseite bis zum Schnittpunkt der Krümmung mit der Tangente an die lichtempfindliche Fläche des Wandlers, die die erste Schmalseite unter dem Grenzwinkel schneidet, derart bogenförmig ausgeführt ist, daß in einem beliebigen Punkt dieses Bereiches die Winkelhalbierende zwischen der Tangente an die lichtempfindliche Fläche des Wandlers und der Geraden, die die erste Schmalseite unter dem Grenzwinkel - schneidet, senkrecht auf der Kurve steht, wenn in einem daran anschliessenden Abschnitt die Tangenten an die lichtempfindliche Fläche des Wandlers auf der Kurve senkrecht stehen, bis die Tangente senkrecht auf der ersten Schmalseite steht, und wenn der übrige Bereich der zweiten Schmalseite parallel zu der ersten Schmalseite verläuft.

Die Erfindung ist nachfolgend anhand von in der Zeichnung dargestellten Ausführungsbeispielen näher erläutert. Es zeigen:

Fig. 1 den Aufnahmeteil einer bekannten Röntgendiagnostikeinrichtung,

Fig. 2 den Wiedergabeteil mit Lichtleiteroptik einer bekannten Röntgendiagnostikeinrichtung,

Fig. 3 die erfindungsgemäße Lichtleiteroptik,

Fig. 4 ein Detail der in Figur 3 dargestellten Lichtleiteroptik,

Fig. 5 eine alternative Ausbildung der Lichtleiteroptik,

Fig. 6 den prinzipiellen Aufbau des Wandlerteiles,

Fig. 7 den speziellen Aufbau des erfindungsgemäßen Wandlerteiles mit Lichtleiteroptik, und

Fig. 8 ein Detail des in Figur 7 dargestellten Wandlerteiles.

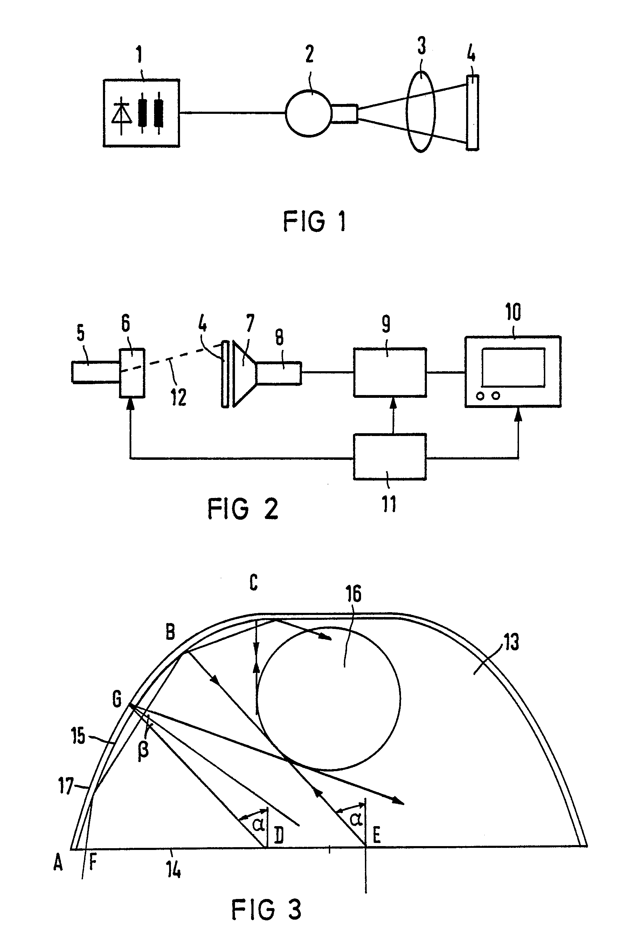

In der Figur 1 ist ein Hochspannungsgenerator 1 dargestellt, der eine Röntgenröhre 2 speist, die Röntgenstrahlen aussendet, die einen Patienten 3 durchdringen. Auf einen Lumineszenz-Speicherleuchtschirm 4, einer Vorlage, fallen die Röntgenstrahlen, die durch den Patienten 3 entsprechend seiner Transparenz geschwächt wurden. Dieses auffallende Strahlenbild erzeugt in dem Speicherleuchtschirm 4 Defektelektronen, die in einer Potentialfalle des Leuchtstoffes gespeichert werden, so daß in dem Speicherleuchtschirm 4 ein latentes Bild gespeichert ist.

Zur Wiedergabe des latenten Bildes wird der Speicherleuchtschirm 4, der einer Vorlage entspricht, von einem Laserstrahl 12 bildpunktweise abgetastet, der von einem Laser 5 erzeugt und von einer Ablenkvorrichtung 6 über die Fläche des Leuchtschirmes 4 zeilenweise abgelenkt wird. Die Ablenkvorrichtung 6 für den Laser 5 kann beispielsweise aus einem Ablenkspiegel für die vertikale und einem elektrooptischen Strahlenablenker für die horizontale Ablenkung bestehen. Die vertikale Ablenkung kann aber auch durch Parallel-Vorschub des Leuchtschirmes 4 senkrecht zur Abtastzeile erreicht werden. Durch die Abtastung mit dem Laserstrahl 12 werden alle auf dem Speicherleuchtschirm 4 liegenden Bildpunkte zeilenweise nacheinander angeregt und zum Leuchten gebracht. Eine Lichtleiteroptik 7 erfaßt das vom Speicherleuchtschirm 4 emittierte Licht und leitet es auf einen lichtelektrischen Wandler 8, der die Helligkeit der abgetasteten Bildpunkte erfaßt und in ein elektrisches Signal umwandelt, das einer Wiedergabeschaltung 9 zugeführt wird, die aus den einzelnen analogen Ausgangssignalen des Wandlers 8 ein Videosignal zur Darstellung auf einem Monitor 10 erzeugt. Die Wiedergabeschaltung 9 kann Bildspeicher, Verarbeitungsschaltungen und Wandler enthalten. Eine Steuereinrichtung 11 erzeugt die Steuertakte zur Synchronisation der Ablenkvorrichtung 6, der Wiedergabeschaltung 9 und des Monitors 10.

In der Figur 3 ist die erfindungsgemäße Lichtleiteroptik schematisch dargestellt. Sie besteht aus einer lichtleitenden Platte 13, die eine erste geradlinige Schmalseite 14 aufweist. Die Enden dieser ersten Schmalseite 14 sind durch eine zumindest bereichsweise bogenförmig gekrümmte zweite Schmalseite 15 verbunden. In der Mitte der ersten Schmalseite 14 ist im oberen Bereich der Platte 13 ein kreisförmiges Loch 16 zur Aufnahme des Wandlers 8 angebracht.

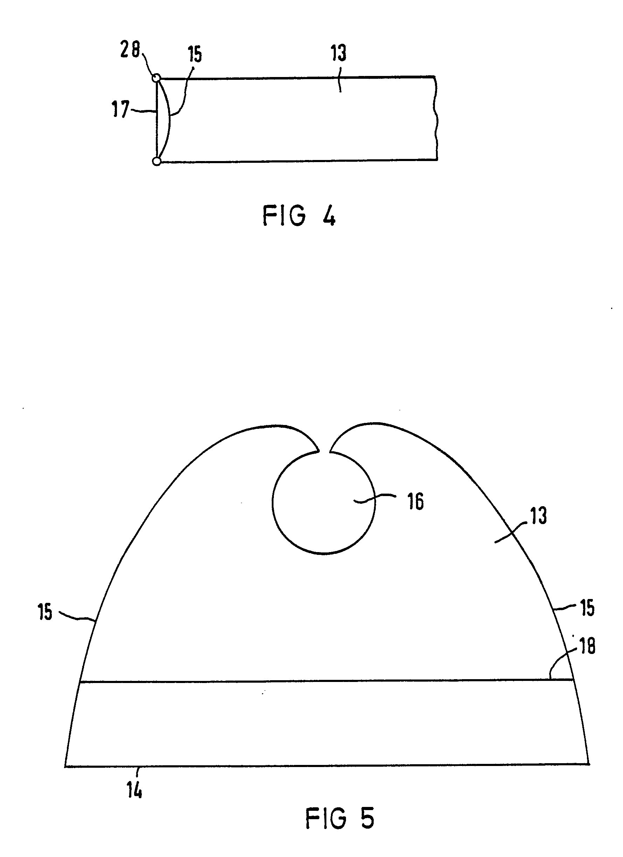

An der zweiten Schmalseite 15 ist ein Spiegel 17 angeordnet, der eine Reflexion der Lichtstrahlen bewirkt. Soll nun neben der mit Verlusten behafteten Reflexion an der Fläche des Spiegels 17 eine verlustfreie totale Reflexion möglich sein, so darf der Spiegel 17, wie in Figur 3 dargestellt, nicht in optischem Kontakt mit der zweiten Schmalseite 15 stehen. Dadurch verlaufen alle Reflexionen, die auf die zweite Schmalseite 15 unter einem Winkel auftreffen, der größer als der optische Grenzwinkel $\alpha$ ist, unter verlustfreier Totalreflexion. Eine derartige Anordnung des Spiegels ist in Figur 4 dargestellt, bei der der Spiegel 17 aus einer dünnen metallbedampften Folie besteht. Die zweite Schmalseite 15 ist in Richtung ihrer kleinen Abmessung schwach konkav gekrümmt. Über diese Krümmung wird der Spiegel 17 als Band gespannt und an wenigen Stellen mit transparentem Kitt 28 angeklebt. Wegen der breiten Apertur führt dies nicht zu lokalen Schwankungen der Lichtüberführung.

Die bogenförmige Krümmung der zweiten Schmalseite 15 ist in einem Bereich vom Schnittpunkt A der beiden Schmalseiten 14 und 15 bis zum Schnittpunkt B der Krümmung der Schmalseite 15 mit der Tangente an das Loch 16 bzw. den Durchmesser der lichtempfindlichen Fläche des Wandlers 8, die die erste Schmalseite 14 unter dem optischen Grenzwinkel $\alpha$ schneidet, derart bogenförmig ausgeführt, daß in einem beliebigen Punkt dieses Bereiches die Winkelhalbierende zwischen der Tangente an das Loch 16 bzw. den Durchmesser der lichtempfindlichen Fläche des Wandlers 8 und der Geraden, die die erste Schmalseite unter dem Grenzwinkel $\alpha$ schneidet, senkrecht auf der Kurve steht. Der optische Grenzwinkel $\alpha$ ist in diesem Falle der größtmögliche Ausfallwinkel, der einen nahezu parallel zur ersten Schmalseite 14 verlaufenden Lichtstrahl in die Schmalseite eintreten lassen würde. Er läßt sich für die verschiedenen möglichen Materialien aufgrund folgender Formel berechnen:

$$\sin \alpha = 1/n,$$

wobei n die optische Brechzahl des verwendeten Materials ist. Bei der Verwendung, beispielsweise von Acrylglas mit einer Brechzahl n = 1,5, ergibt sich somit ein Grenzwinkel von 42°.

In einem darauffolgenden Abschnitt vom Schnittpunkt B bis zum Schnittpunkt C der Tangente an das Loch 16, die auf der ersten Schmalseite 14 senkrecht steht, ist die Krümmung derart ausgeführt, daß die Tangenten an das Loch 16 bzw. den Durchmesser der lichtempfindlichen Fläche des Wandlers 8 senkrecht auf der Krümmung der Schmalseite 15 stehen. Der weitere Bereich bis zur Mitte der Schmalseite 15 ist geradlinig ausgeführt, so daß in diesem Bereich die zweite Schmalseite 15 parallel zu der ersten Schmalseite 14 verläuft. Der übrige Bereich der Krümmung der zweiten Schmalseite 15 verläuft symmetrisch zu den beschriebenen Bereichen.

Die auf der Schmalseite 14 eintretenden Lichtstrahlen können verschiedene Verläufe aufweisen. Tritt beispielsweise im Schnittpunkt E auf der ersten Schmalseite 14 ein Lichtstrahl ein, so ist dessen Austrittswinkel aus der ersten Schmalseite 14 kleiner als der Grenzwinkel $\alpha$, so daß dieser Lichtstrahl direkt aus der Seitenfläche des Loches 16 austritt. Tritt dagegen ein Lichtstrahl im Schnittpunkt D mit der ersten Schmalseite 14 aus, so ist sein Winkel mit dem Lot ebenfalls kleiner als der Grenzwinkel $\alpha$. Das bedeutet aber, daß der Auftreffwinkel $\beta$ auf der zweiten Schmalseite 15 ebenfalls kleiner als der Winkel $\alpha$ ist, so daß nach der Reflexion an dem Spiegel 17 der Lichtstrahl aus den Seitenflächen des Loches 16 austritt.

Tritt nun beispielsweise im Schnittpunkt F mit der ersten Schmalseite 14 wie dargestellt ein Lichtstrahl ein, so wird er, da der Spiegel 17, wie in Figur 3 dargestellt, in geringem Abstand zu der zweiten Schmalfläche 15 um diese geführt ist, mehrfach an der Krümmung der zweiten Schmalseite 15 total reflektiert wird, bis er aus der Seitenfläche des Loches 16 austritt. Es tritt in dem zuletzt genannten Fall keine Reflexion an dem Spiegel 17, sondern eine verlustfreie Totalreflexion an der Schmalseite 15 auf, so daß der dargestellte Lichtstrahl durch Spiegelung ungeschwächt aus dem Loch 16 der Platte 13 austreten kann.

In der Figur 5 ist eine andere Ausführungsform der Lichtleiteroptik dargestellt. Hierbei ist die zweite Schmalseite 15 derart gekrümmt, daß sie die Form einer Evolute aufweist, deren Krümmungsradien in der Nähe der ersten Schmalseite 14 die größten Werte aufweisen. Die beiden von der ersten Schmalseite 14 ausgehenden symmetrischen Evoluten der zweiten Schmalseite 15 laufen auf der lichtempfindlichen Fläche des Wandlers 8 in dem Loch 16 aus. Dadurch bleibt zwischen den beiden Teilen der zweiten Schmalseite 15 ein kleiner Spalt, der zur mechanischen Bearbeitung dienen kann. Zur Erreichung von unterschiedlichen Zeilenlängen, d.h. unterschiedlichen Längsabmessungen der ersten Schmalseite 14, braucht die Platte 13 nur entsprechend gekürzt zu werden, wie dies durch die Linie 18 gezeigt ist.

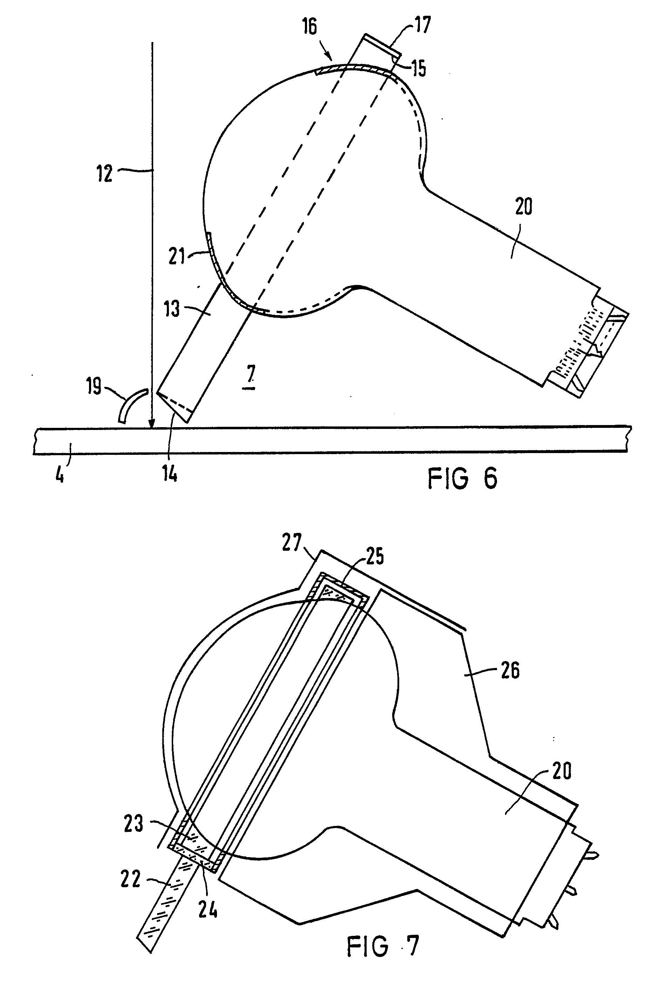

In der Figur 6 ist die prinzipielle Anordnung des Wandlerteiles dargestellt. Auf die vom Laserstrahl 12 abgetastete Zeile des Speicherleuchtschirmes 4 ist die erste Schmalseite 14 der Lichtleiteroptik 7 ausgerichtet. Die Platte 13 der Lichtleiteroptik 7 bildet mit dem Speicherleuchtschirm 4 einen Winkel von etwa 60°, damit die Lichtwege kurz gehalten werden können. Die erste Schmalseite 14 weist gegenüber der Flächennormale der Lichtleiteroptik 7 einen Winkel von 15° auf, so daß die erste Schmalseite 14 mit dem Speicherleuchtschirm 4 einen Win kel von 45° bildet. Ein gekrümmter zweiter Spiegel 19 ist zwischen dem Speicherleuchtschirm 4 und der im Abstand zum Speicherleuchtschirm 4 liegenden Kante der ersten Schmalseite 14 angeordnet. Er reflektiert die von dem Speicherleuchtschirm 4 emittierten Lichtstrahlen auf die erste Schmalseite 14. Zwischen dem zweiten Spiegel 19 und der im Abstand zum Speicherleuchtschirm 4 liegenden Kante der ersten Schmalseite 14 tritt der Laserstrahl durch einen Spalt und trifft auf den Speicherleuchtschirm 4 auf. Er kann ihn aber auch von der dem Wandlerteil entgegengesetzten Seite des Speicherleuchtschirmes 4 abtasten.

In dem Loch 16 der Platte 13 der Lichtleiteroptik 7 ist als lichtelektrischer Wandler 8 ein Fotomultiplier 20 befestigt. Dieser weist als lichtempfindliche Fläche eine Fotokathode 21 auf, die sich auch auf die Seitenwände erstreckt, so daß sie das aus den Seitenflächen des Loches 16 austretende Licht empfangen kann. Anstelle des hier dargestellten Fotomultipliers 20 lassen sich auch andere Detektoren verwenden, die derart gebaut sind, daß sie das aus der das Loch 16 begrenzenden Fläche austretende Licht erfassen können. Es wäre hierbei auch denkbar, mehrere Einzeldetektoren zu verwenden. Der Wandler ist mit optischem Kitt eingekittet; bei annähernder Übereinstimmung der Brechungsindices vom Lichtleiter, Kitt und Fotomultiplier-Glas wird die Fotokathode bis zum tangentialen Lichteinfall ausgenutzt. Ohne Kitt (oder Öl oder Fett) entstehen Verluste durch Totalreflexion.

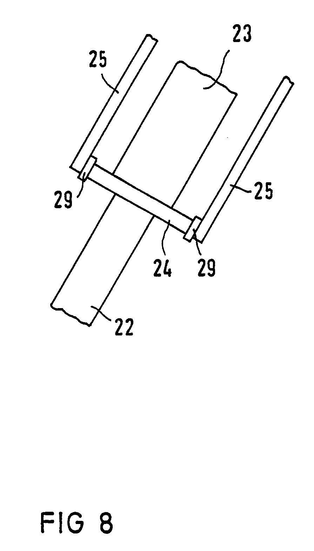

In der Figur 7 ist eine vorteilhafte Ausführungsform des Wandlerteiles mit Lichtleiteroptik 7 und Wandler 8 dargestellt. Die Lichtleiteroptik 7 besteht aus einem Vorsatzstück 22 und einem Hauptlichtleiter 23, wobei dem Hauptlichtleiter 22 der in dem Loch 16 befindliche Fotomultiplier 20 zugeordnet ist. Das Vorsatzstück 22 enthält die erste Schmalseite 14. Zwischen den geradlinigen Trennflächen des Hauptlichtleiters 23 und des Vorsatzstückes 22 befindet sich ein Filter 24 gegen das vom Laserstrahl 12 ausgehende Streulicht, das durch diesen Filter 23 stark geschwächt wird. Damit kein Streulicht seitlich in den Hauptlichtleiter 23 eintreten kann, ist dieser, wie auch aus der Figur 8 ersichtlich, von einem Lichtschutzgehäuse 25 umgeben und mit dem Filter 24 durch - schwarzen Kitt 29 verbunden. Damit sämtliches aus dem Vorsatzstück 22 austretende Licht erfaßt wird, das maximal unter einem Winkel von der Größe des Grenzwinkels austreten kann, weist die Eingangsfläche des Hauptlichtleiters 23 in ihrer Länge und Breite größere Abmessungen als die Ausgangsfläche des Vorsatzstückes 22 auf. Dadurch werden auch die Strahlen erfaßt, die am Rande des Vorsatzstükkes 22 unter dem Grenzwinkel von 42° austreten.

Die Außenflächen des Fotomultipliers 20 außerhalb des Lichtschutzgehäuses 25 sind geschwärzt. Damit Magnetfelder keinen Durchgriff auf den Fotomultipliers 20 haben können, ist der Hals des Fotomultiplier 20 durch eine MU-Metallhaube 26 umgeben, an der eine MU-Metallkappe 27 mit einer Lasche befestigt ist, so daß bis auf den Eingangsbereich der Fotomultiplier 20 gegen Magnetfelder abgeschirmt ist.

## Ansprüche

1. Lichtleiteroptik zur Lichtführung des von einer Vorlage (4) emittierten Lichtes zu einem lichtelektrischen Wandler (8, 20), der eine Umwandlung des ausgelesenen Bildes der Vorlage (4) in elektrische Signale bewirkt, wobei die Vorlage -(4) zeilenförmig abgetastet wird, **dadurch gekennzeichnet**, daß die Lichtleiteroptik (7) aus einer lichtleitenden Platte (13) besteht, die eine auf die Vorlage (4) ausgerichtete erste geradlinige Schmalseite (14) und eine die Enden dieser Schmalseite -(14) verbindende, zumindest bereichsweise bogenförmig gekrümmte zweite Schmalseite (15) aufweist, und daß die Platte (13) ein Loch (16) zur Aufnahme des Wandlers (8, 20) aufweist, der das aus der das Loch (16) begrenzenden Fläche der Platte (13) austretende Licht empfängt.

2. Lichtleiteroptik nach Anspruch 1, **dadurch gekennzeichnet**, daß die zweite Schmalseite (15) von einem Spiegel (17) umgeben ist.

3. Lichtleiteroptik nach Anspruch 1 oder 2, **dadurch gekennzeichnet** , daß die Platte (13) gegenüber der Vorlage (4) in einem ersten Winkel ausgerichtet ist, und daß die erste Schmalseite -(14) in einem zweiten Winkel gegenüber der Flächennormale der Platte (13) derart ausgerichtet ist, daß die erste Schmalseite (14) einen Winkel von etwa 45° gegenüber der Vorlage (4) aufweist.

4. Lichtleiteroptik nach einem der Ansprüche 2 oder 3, **dadurch gekennzeichnet**, daß der erste Spiegel (17) in geringem Abstand von der zweiten Schmalseite (15) angeordnet ist.

5. Lichtleiteroptik nach einem der Ansprüche 2 oder 3, **dadurch gekennzeichnet**, daß die zweite Schmalseite (15) in Richtung ihrer kleinen Abmessung schwach konkav gekrümmt ist und der aus einer metallisch bedampften Folie bestehende Spiegel (17) auf dieser Schmalseite (15) aufgespannt ist.

6. Lichtleiteroptik nach einem der Ansprüche 1 bis 5, **dadurch gekennzeichnet**, daß die Platte -(13) zweiteilig ausgeführt ist, wobei der erste Teil einen Hauptlichtleiter (23) mit dem den Wandler - (20) aufnehmenden Loch (16) und der zweite Teil ein Vorsatzstück (22) bildet, das die erste Schmalseite (14) aufweist, und daß zwischen den aneinandergrenzenden Seiten des Hauptlichtleiters (23) und des Vorsatzstückes (22) ein streifenförmiger Filter (24) angeordnet ist.

7. Lichtleiteroptik nach Anspruch 6, **dadurch gekennzeichnet,** daß wenigstens im Bereich des Filters (24) der Querschnitt des Hauptlichtleiters (23) größer als der des Vorsatzstückes (22) ist.

8. Lichtleiteroptik nach einem der Ansprüche 1 bis 7, **dadurch gekennzeichnet,** daß die Krümmung der zweiten Schmalseite (15) zumindest bereichsweise die Form einer Evolute hat, deren Krümmungsradien in der Nähe der ersten Schmalseite (14) die größten Werte aufweisen.

9. Lichtleiteroptik nach Anspruch 8, **dadurch gekennzeichnet,** daß zwei symmetrische Evoluten der zweiten Schmalseite (15) auf der lichtempfindlichen Fläche (21) des Wandlers (8) in dem Loch - (16) auslaufen.

10. Lichtleiteroptik nach einem der Ansprüche 1 bis 7, **dadurch gekennzeichnet,** daß die zweite Schmalseite (15) in einem Bereich von der ersten Schmalseite (14) bis zum Schnittpunkt (B) der Krümmung mit der Tangente an die lichtempfindliche Fläche (21) des Wandlers (8), die die erste Schmalseite (14) unter dem Grenzwinkel ($\alpha$) - schneidet, derart bogenförmig ausgeführt ist, daß in einem beliebigen Punkt dieses Bereiches die Winkelhalbierende zwischen der Tangente an die lichtempfindliche Fläche (21) des Wandlers (8) und der Geraden, die die erste Schmalseite (14) unter dem Grenzwinkel ($\alpha$) schneidet, senkrecht auf der Kurve steht, daß in einem daran anschliessenden Abschnitt (B bis C) die Tangenten an die lichtempfindliche Fläche (21) des Wandlers (8) auf der Kurve senkrecht stehen, bis die Tangente senkrecht auf der ersten Schmalseite (14) steht, und daß der übrige Bereich der zweiten Schmalseite - (15) parallel zu der ersten Schmalseite (14) verläuft.

0 232 775

FIG 1

FIG 2

FIG 3

FIG 4

FIG 5

FIG 6

FIG 7

FIG 8

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-4 485 302  (TANAKA et al.) <br> * Figuren 1,7,8 * | 1,3 | H 04 N   1/028 <br> G 01 T   1/29 <br> G 02 B   6/06 |
| A | US-A-3 264 407  (HEADD et al.) <br> * Spalte 5, Zeilen 35-68;  Spalte 6, Zeilen 26-44 * | 1,3,8 | |
| A | US-A-4 321 630  (KRAMER) <br> *  Spalte 1, Zeile 61 - Spalte 2, Zeile 6; Spalte 3,  Zeilen  1-7; Spalte 5, Zeilen 18-48; Spalte 6, Zeilen 52-57 * | 1,2 | |
| A | GB-A-1 586 572  (XEROX) <br> *  Seite  1,  Zeile 64 - Seite 2, Zeile 17 * | 1,2 | |
| A | RCA REVIEW, Band 15, Nr. 6, September 1954, Seiten 275-290, Princeton, US; W.H. BLISS et al.: "Facsimile scanning by cathode-ray tube" <br> * Seite 285, Absatz 1 * | 1,3,6, 9 | |
| A | FR-A-2 020 106  (MATSUSHITA) <br> * Seite 6, Zeile 12  -  Seite  7, Zeile  34;  Seite  9,  Zeile 38 - Seite 10,  Zeile  20;  Seite  11, Zeilen 8-20 * | 1,3 | |

|  |  |
|---|---|
| | RECHERCHIERTE SACHGEBIETE (Int. Cl.4) |
| | H 04 N <br> G 01 J <br> G 02 B |

```
                   ---          -/-
```

Der vorliegende Recherchenbericht wurde für alle Patentansprüche erstellt.

| Recherchenort | Abschlußdatum der Recherche | Prüfer |
|---|---|---|
| DEN HAAG | 25-03-1987 | SCHOENE, K.P. |

Europäisches
Patentamt

| EINSCHLÄGIGE DOKUMENTE | | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | US-A-3 038 959 (BEURLE)<br>* Spalte 2, Zeile 66 - Spalte 3, Zeile 19 *<br><br>----- | 1,2,4 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 25-03-1987 | SCHOENE, K.P. |